# EUROPEAN PATENT SPECIFICATION

(11) **EP 1 962 265 B1**
(45) Date of publication and mention of the grant of the patent: **17.02.2016**
(21) Application number: 08101868.1
(22) Date of filing: 22.02.2008
(51) Int. Cl.: G09G 3/20, G09G 5/06, G09G 3/32

(54) **Organic light emitting diode display and driving method thereof**
Organische lichtemittierende Diodenanzeige und Verfahren zu ihrer Ansteuerung
Affichage à diodes électroluminescentes organiques et procédé de commande correspondant

(30) Priority: 23.02.2007 KR 20070018695
(43) Date of publication of application: 27.08.2008
(73) Proprietor: Samsung Display Co., Ltd., Gyeonggi-do (KR)
(72) Inventor: SHIN, Hye-jin, c/o Samsung SDI Co., LTD., Suwon-si, Gyeonggi-do (KR); LEE, Myung-ho, Samsung SDI Co., LTD, Suwon-si, Gyeonggi-do (KR)
(74) Representative: Gulde & Partner

(56) References cited:
- US-A- 5 315 694
- US-A1- 2001 050 757
- US-A1- 2003 231 160

## Description

### BACKGROUND OF THE INVENTION

### 1. Field of the Invention

Exemplary embodiments relate to an organic light emitting diode (OLED) display and a driving method thereof. More particularly, example embodiments relate to an OLED display having improved display and visibility across varying ambient light conditions and driving methods thereof.

### 2. Description of the Related Art

Recently, various flat display technologies, i.e., plasma display panels (PDPs), liquid crystal displays (LCDs), and OLED displays, have been developed, which may have advantages over cathode ray tubes (CRT), e.g., reduced weight and volume. However, OLED displays may provide better luminance feature and color purity, as OLED displays use an organic compound as an emitting material. Further, OLED displays may be thin and light, and may be driven with low power and, thus, applicable to portable display devices.

However, because portable display devices may be exposed to varying environments and light conditions, e.g., exposed to outdoor visible light, display quality and viewability or visibility of an image displayed on the portable display device may be reduced. In other words, the brightness of an image displayed on the portable display device may be reduced (or faded out) under light, e.g., solar light, in which surrounding or ambient light illumination intensity may be brighter than the brightness of the image displayed.

Therefore, there is a need for the development of a portable display device, e.g., an OLED display, having improved display and viewability across varying ambient light conditions and methods of driving such devices.

US Patent application 2003/0231160 A1 discloses a display device and a method of driving the display device including adjustment of the pixel data of the display device according to ambient illumination.

Furthermore, US Patent application 2001/0050757 A1 is directed to an image display device that performs a color correction according to external light conditions.

### SUMMARY OF THE INVENTION

Exemplary embodiments are therefore related to an OLED display, and methods for driving the same, which substantially overcome one or more of the problems due to the limitations and disadvantages of the related art.

It is therefore a feature of exemplary embodiments to provide an OLED display having improved display and viewability across varying ambient light conditions, e.g., across varying intensities of peripheral light.

At least one of the above and other features of exemplary embodiments may provide an OLED display, including a pixel portion having a plurality of pixels connected to scan lines and data lines, a scan driver adapted to generate and supply scan signals to the scan lines, a data driver adapted to generate and supply data signals to the data lines, an optical sensor adapted to generate an optical sensing signal according to an intensity of light, and a data converter adapted to store input image data or changed data from the input image data corresponding to the optical sensing signal. The data driver is adapted to generate the data signal corresponding to the input image data or the changed data.

The data converter includes a comparator adapted to output a selection signal corresponding to the optical sensing signal, a controller adapted to determine a change or a non-change of the input image data corresponding to the selection signal, a first calculator adapted to generate pixel saturation data corresponding to the input image data received from the controller, a second calculator adapted to extract changed data from a reference look-up table corresponding to the pixel saturation data supplied from the first calculator, wherein the reference look-up table includes saturation and luminance look-up tables, and a memory adapted to store the input image data received from the controller or the changed data supplied from the second calculator.

The comparator compares the optical sensing signal with a predetermined reference value. The comparator outputs the selection signal not to change the input image data when the optical sensing signal is less than the predetermined reference value.

The controller may store the input image data in the memory corresponding to the selection signal.

The comparator may output the selection signal to change the input image data when the optical sensing signal is greater than the predetermined reference value. The controller may transmit the input image data to the first calculator corresponding to the selection signal.

The OLED display may further include a saturation change matrix to be calculated by the first calculator.

The first calculator may calculate input data by subpixels included in the input image data and the saturation change matrix to obtain destination saturation data by subpixels, and may generate the pixel saturation data using the destination saturation data.

The second calculator linearly may interpolate between two values adjacent to the pixel saturation data among values stored in the reference look-up table, so as to extract the changed data when the pixel saturation data not stored in the reference look-up table are input.

At least one of the above and other features of exemplary embodiments may provide a method for driving an OLED display. The method may include supplying scan signals generated by a scan driver to scan lines, supplying data signals generated by a data driver to data lines, generating an optical sensing signal according to an intensity of light sensed on an optical sensor, and storing input image data or changed input image data in accordance with the optical sensing signal. The data driver generates the data signal corresponding to the input image data or the changed input image data.

The method includes generating a selection signal corresponding to the intensity of light, determining a state of input image data according to the selection signal, and extracting data when the changed input image data is determined, the changed data being obtained by changing at least one of a saturation or a luminance of the input image data.

The selection signal is set to change the input image data when the intensity of light is greater than a predetermined reference value.

The method of extracting changed data when the change of the input image data is determined includes generating pixel saturation data from the input image data, and extracting changed data from a reference look-up table corresponding to the pixel saturation data.

The method of generating pixel saturation data from the input image data further includes calculating the input image data and a saturation change matrix to obtain destination saturation data by subpixels, and generating the pixel saturation data corresponding to the destination saturation data by subpixels.

The method may further include performing a linear interpolation between two values adjacent to the pixel saturation data among the values stored in the reference look-up table to extract the changed data when the pixel saturation data not stored in the reference look-up table are input.

The selection signal may be set not to change the input image data when an intensity of light is less than a predetermined reference value.

The method may further include storing the input image data and generating a data signal corresponding to the stored input image data.

### BRIEF DESCRIPTION OF THE DRAWINGS

The above and other features and advantages of exemplary embodiments will become more apparent to those of ordinary skill in the art by describing in detail exemplary embodiments thereof with reference to the attached drawings, in which:
FIG. 1 illustrates a schematic view of an OLED display according to an exemplary embodiment;
FIG. 2 illustrates a schematic view of an exemplary data converter shown in FIG. 1;
FIG. 3A to FIG. 3D illustrate matrices of exemplary calculating destination saturation data by subpixels using a saturation change matrix by a first calculator shown in FIG. 2; and
FIG. 4 illustrates a flow chart of a driving method of the data converter shown in FIG. 2.

### DETAILED DESCRIPTION OF THE INVENTION

Korean Patent Application No. 10-2007-0018695, filed on February 23, 2007, in the Korean Intellectual Property Office, and entitled: "Organic Light Emitting Display and Driving Method Thereof," is incorporated by reference herein in its entirety.

Exemplary embodiments will now be described more fully hereinafter with reference to the accompanying drawings; however, the exemplary embodiments may be embodied in different forms and should not be construed as limited to the embodiments set forth herein. Rather, these exemplary embodiments are provided so that this disclosure will be thorough and complete, and will fully convey the scope of the invention to those skilled in the art.

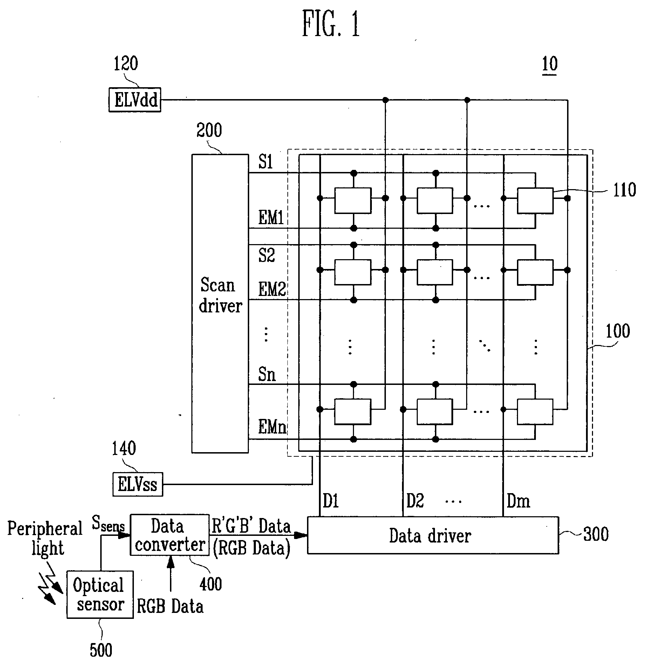

FIG. 1 illustrates a schematic view of an OLED display 10 according to an exemplary embodiment.

Referring to FIG. 1, the OLED display 10 may include a pixel portion 100, a scan driver 200, a data driver 300, a data converter 400, and an optical sensor 500. It should be appreciated that other devices and/or elements may be included or excluded in the OLED display 10.

The pixel portion 100 may include a plurality of pixels 110, which may be connected to emission control lines EM1 to EMn and data lines D1 to Dm. In an exemplary embodiment, one pixel 110 may include an OLED, and may be composed of at least two subpixels for emitting light of different colors, e.g., red, green and blue. It should be appreciated that other configuration of the subpixels may be employed.

The pixel portion 100 may display images corresponding to a voltage of a first power supply ELVdd 120, and a voltage of a second power supply ELVss 140. The pixel portion 100 may further display images corresponding to a scan signal supplied by the scan lines S1, S2, ...., Sn and an emission control signal supplied by the emission control lines EM1, EM2, ...., EMn generated from the scan driver 200, and a data signal supplied by the data lines D1, D2,..., Dm generated from the data driver 300.

The scan signals generated by the scan driver 200 may be sequentially supplied to respective scan lines S1 to Sn, and the emission control signals also generated by the scan driver 200 may be sequentially supplied to respective emission control lines EM1 to EMn. It should be appreciated that the scan signals and the emission control signals may also be non-sequentially supplied to the scan lines S1 to Sn and the emission control lines EM1 to EMn, respectively.

The data driver 300 may receive image data R'G'B' Data (or RGB Data) from the data converter 400 and may generate data signals corresponding thereto. The data signals generated by the data driver 300 may be supplied to the data lines D1 to Dm in synchronization with the scan signal and may be transferred to each pixel 110. It should be appreciated that the data signals may also be supplied to the data lines D1 to Dm in a non-synchronization manner with the scan signal.

The data converter 400 may select one of the states (e.g., a changed or a non-changed state) of the input image data RGB Data according to an optical sensing signal Sₛₑₙₛ input from an optical sensor 500. Further, the data converter 400 may store the input image data RGB Data or the changed data R'G'B' Data, which may be obtained by changing the input image data RGB Data.

Further, the data converter 400 may generate and store changed data R'G'B' Data when a change of the input image data RGB Data is necessary. In particular, the changed data R'G'B' Data may be obtained by changing a luminance value and/or saturation value of the input image data RGB Data.

Further, when a changed input image data RGB Data is not required, the data converter 400 may store the input image data RGB Data supplied thereto.

The changed data R'G'B' Data and/or the input image data RGB Data stored in the data converter 400 may be input to the data driver 300.

The optical sensor 500 may include an optical sensing device, i.e., a transistor or a photo diode, and may sense an intensity of peripheral or ambient light. The optical sensor 500 may then generate an optical sensing signal Sₛₑₙₛ corresponding to the sensed intensity of the peripheral or ambient light. The optical sensing signal Sₛₑₙₛ generated by the optical sensor 500 may then be supplied to the data converter 400.

Further, the data converter 400 may generate the changed data R'G'B' Data so as to enhance the visibility when the optical sensing signal Sₛₑₙₛ is greater than a predetermined reference value. Further, the changed data R'G'B' Data may be obtained by changing the input image data RGB Data. For example, when the optical sensing signal Sₛₑₙₛ corresponding to light intensity greater than the predetermined reference value is supplied, the data converter 400 may generate the changed data R'G'B' Data to control an improvement of the visibility. In implementation, the changed data R'G'B' Data may be obtained by increasing a saturation of the input image data RGB Data.

Further, the input image data RGB Data may be changed according to ambient environment conditions, e.g., an intensity of peripheral or ambient light, in order to improve the visibility of an image displayed in the pixel portion 100.

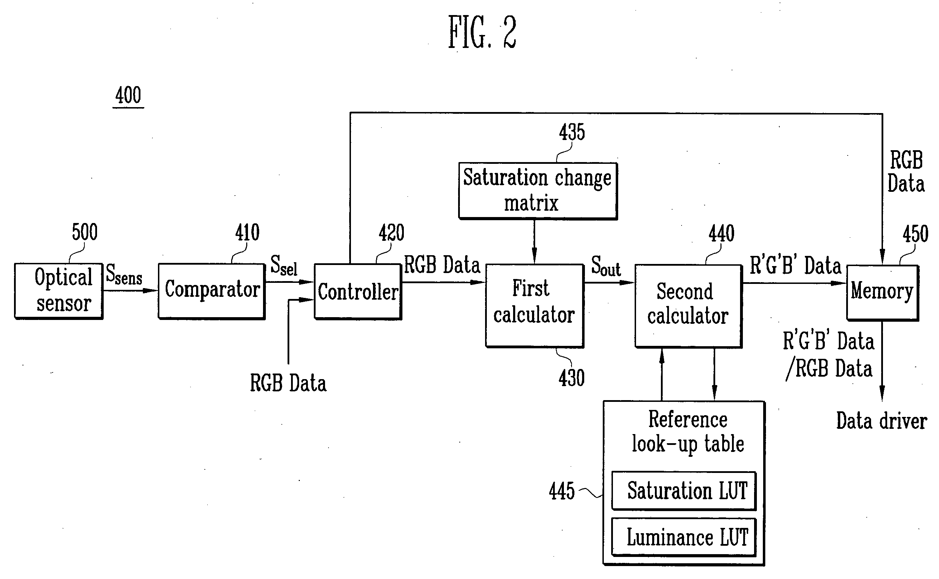

Referring to FIG. 2, the data converter 400 may include a comparator 410, a controller 420, a first calculator 430, a saturation change matrix 435, a second calculator 440, a reference look-up table 445, and a memory 450. It should be appreciated that other components and/or devices may be included or excluded in the data converter 400.

The comparator 410 may compare an optical sensing signal Sₛₑₙₛ supplied from the optical sensor 500 with a predetermined reference value and may output a corresponding selection signal Sₛₑₗ.

For example, when the optical sensing signal Sₛₑₙₛ is less than the predetermined reference value, the comparator 410 may output a selection signal Sₛₑₗ so that the input image data RGB Data is not changed. Alternatively, when the optical sensing signal Sₛₑₙₛ is equal to or greater than the predetermined reference value, the comparator 410 may output a selection signal Sₛₑₗ to change the input image data RGB Data.

The selection signal Sₛₑₗ output from the comparator 410 may then be provided to the controller 420. The controller 420 may determine a state (e.g., changed or a non-changed) of the input image data RGB Data corresponding to the input selection signal Sₛₑₗ.

The controller 420 may further transfer and/or store the input image data RGB Data to the first calculator 430 or, alternatively, to the memory 450 according to the determined changed or non-changed input image data RGB Data.

Further, when the changed input image data RGB Data is selected, the controller 420 may transfer the input image data RGB Data to the first calculator 430. Further, when the non-changed input image data RGB Data is selected, the controller 420 may store the input image data RGB Data in the memory 450.

The first calculator 430 may generate pixel saturation data Sₒᵤₜ corresponding to the input image data RGB Data from the controller 420 referring to the saturation change matrix 435.

Further, the first calculator 430 may calculate input data Rin, Gin, and Bin by subpixels along with the saturation change matrix 435 so as to obtain destination saturation data Rs, Gs, and Bs by subpixels, and may generate the pixel saturation data Sₒᵤₜ using the same.

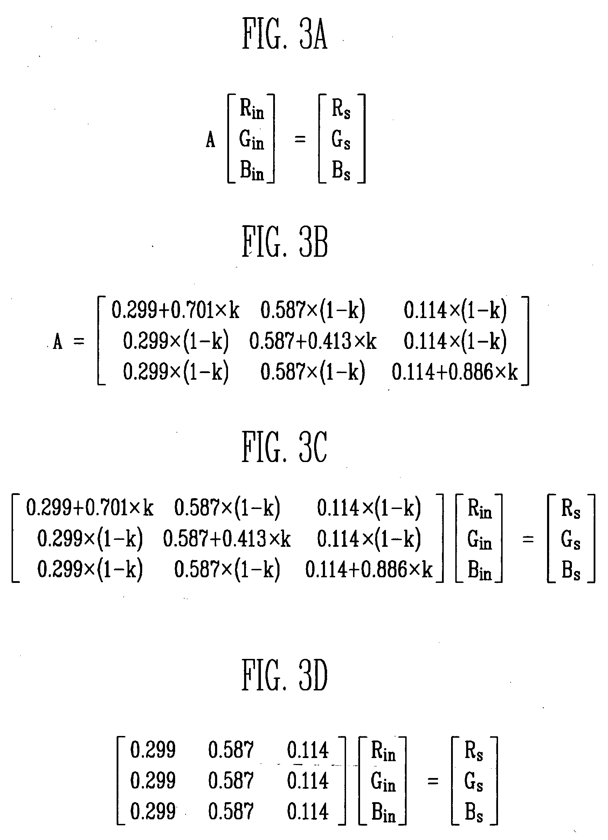

Further, the destination saturation data Rs, Gs, and Bs by subpixels may be calculated using the saturation change matrix 435. A method for calculating the destination saturation data Rs, Gs, and Bs by subpixels will be explained later with reference to FIG. 3A to FIG. 3D.

The pixel saturation data Sₒᵤₜ may be calculated from the destination saturation data Rs, Gs, and Bs by subpixels. The pixel saturation data Sₒᵤₜ may be set to a maximum value among the destination saturation data Rs, Gs, and Bs by subpixels or, alternatively, to a predetermined value corresponding to a difference between a maximum value and a minimum value of the destination saturation data Rs, Gs, and Bs by subpixels.

The pixel saturation data Sₒᵤₜ generated by the first calculator 430 may be provided to the second calculator 440. The second calculator 440 may extract the changed data R'G'B' Data from the reference look-up table 445 corresponding to the pixel saturation data Sₒᵤₜ supplied from the first calculator 430, and may store the changed data R'G'B' Data in the memory 450.

In particular, the second calculator 440 may extract the changed data R'G'B' Data having desired saturation and luminance values by referencing a saturation look-up table (LUT) and a luminance look-up table (LUT) stored in the reference look-up table 445. The saturation LUT and the luminance LUT may include tables to extract a saturation change value and a luminance change value corresponding to the pixel saturation data Sₒᵤₜ, respectively.

Further, when the pixel saturation data Sₒᵤₜ, which may not be stored in the reference look-up table 445, are input, the second calculator 440 may extract the changed data R'G'B' Data by referencing two values adjacent to the pixel saturation data Sₒᵤₜ (e.g., values stored in the reference look-up table 445). The second calculator 440 may linearly interpolate the changed values, which may correspond to a maximum value among values less than input pixel saturation data Sₒᵤₜ and a minimum value among values greater than the pixel saturation data Sₒᵤₜ, in order to extract the changed data R'G'B' Data.

The memory 450 may store the input image data RGB Data from the controller 420 or the changed data R'G'B' Data from the second calculator 440. The input image data RGB Data or the changed data R'G'B' Data may be stored in the memory 450.

Referring to FIG. 3A to FIG. 3D, the first calculator 430 may multiply the saturation change matrix A by input data Rin, Gin and Bin by subpixels, included in the input image data RGB Data, to obtain destination saturation data Rs, Gs and Bs by subpixels.

Referring to FIG. 3B, the saturation change matrix A may also be a matrix to adjust the saturation using a saturation factor k to determine a saturation adjustment. Further, the saturation change matrix A may be used to convert values of the input data Rin, Gin and Bin by subpixels by a previously selected saturation factor k so as to calculate the data Rs, Gs and Bs by subpixels.

The saturation change matrix A may be set in consideration of a white balance of a pixel, and/or the matrix (as shown in FIG. 3B) may be generally used as the saturation change matrix A.

When the saturation factor k is greater than 1, the saturation may be increased. Alternatively, when the saturation factor k is less than 1, the saturation may be reduced. When the saturation factor k is 1 (e.g., the saturation change matrix A is a unit matrix of 3x3), the saturation may remain the same, i.e., unchanged (as illustrated in FIG. 3C). The saturation factor k determining the degree of saturation change can be freely determined by a planner and also it can be determined to display the optimum visibility according to an experiment: for example, when the display device displays an image under various conditions a saturation variation may be adjusted to the corresponding visibility to determine the optimum saturation factor k.

Further, when all destination saturation data Rs, Gs, and Bs by subpixels are set to be identical with a rate of a white balance, the saturation factor k is zero, as illustrated in FIG. 3B. When, the saturation factor k is zero, the saturation may be changed to a gray image having no saturation, as illustrated in FIG. 3D.

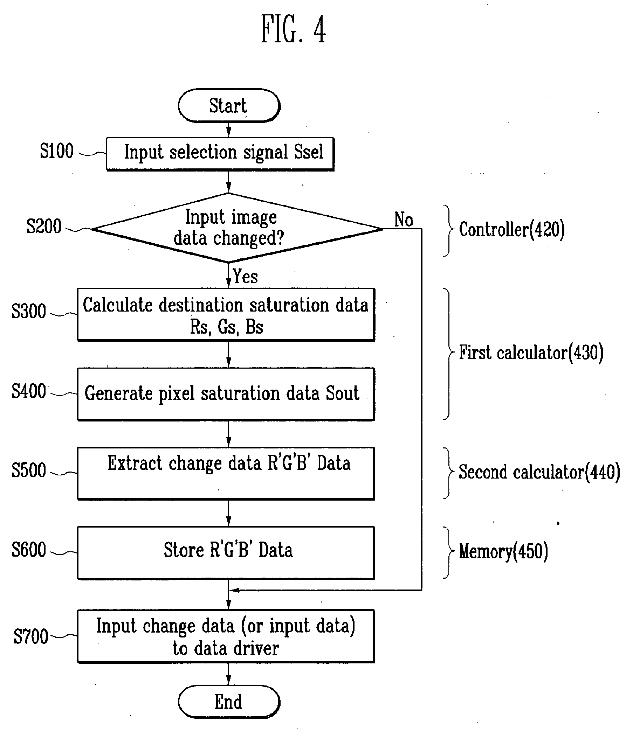

FIG. 4 illustrates a flow chart of a driving method of the data converter 400 shown in FIG. 2.

Referring back to FIG. 2, when an optical sensing signal Sₛₑₙₛ corresponding to an intensity of peripheral light from the optical sensor 500 is input to the comparator 410, the comparator 410 may compare the optical sensing signal Sₛₑₙₛ with a predetermined reference value and may generate a corresponding selection signal Sₛₑₗ.

The selection signal Sₛₑₗ may be a signal to control a state (e.g., change or a non-change) of data. For example, when the intensity of the peripheral light is less than the predetermined reference value, the selection signal is set to '0' indicating a 'not changed' state. Further, when the intensity of the peripheral light is equal to or greater than the predetermined reference value, the selection signal can become a signal of 1 bit set to '1' indicating a 'changed' state.

Referring to FIG. 4, in S100, the selection signal Sₛₑₗ generated by the comparator 410 may be input to the controller 420.

When the controller 420 receives the selection signal Sₛₑₗ, the controller 420 may determine whether a change or a non-change input image data RGB Data corresponding to the selection signal Sₛₑₗ is determined (S200). Accordingly, when a "non-change" selection signal Sₛₑₗ is input to the controller 420, the controller 420 may not change the input image data RGB Data supplied thereto, and may supply the data to the data driver 300. The input image data RGB Data may be temporarily stored in the memory 450 and may be input to the data driver 300 under a control of the controller 420.

Alternatively, when the selection signal Sₛₑₗ calls for a change to input image data RGB Data, the controller 420 may transfer the input image data RGB Data supplied thereto to the first calculator 430. The first calculator 430 may calculate the input image data RGB Data and the saturation change matrix 435 to obtain the destination saturation data Rs, Gs, and Bs by subpixels (S300), and may generate and provide a corresponding pixel saturation data Sₒᵤₜ to the second calculator 440 (S300).

The second calculator 440 may then extract changed data R'G'B' Data from the reference look-up table 445 corresponding to the pixel saturation data Sₒᵤₜ (S500) and may store the changed data R'G'B' Data in the memory 450 (S600).

The changed data R'G'B' Data may be the input image data RGB Data, in which the saturation and/or luminance of the input image data RGB Data may be changed, from the reference look-up table unit 445. Further, when the changed data R'G'B' Data corresponding to the pixel saturation data Sₒᵤₜ supplied from the first calculator 430 is not stored in the reference look-up table 445, the second calculator 440 may extract and store the changed data R'G'B' Data corresponding to the pixel saturation data Sₒᵤₜ by, for example, a linear interpolation in the memory 450.

The changed data R'G'B' Data stored in the memory 450 may be input to the data driver 300 (S700), so that the data may be used to generate a data signal.

Exemplary embodiments relate to an OLED display and driving methods thereof providing an input image data that may be dynamically changed corresponding to an ambient environment, i.e., based on the intensity of peripheral light, in order to improve and enhance the quality, visibility and/or viewability of the display device. For example, when an OLED display is exposed to peripheral light greater than a predetermined reference value, changed data may be generated and a corresponding changed image may be displayed, so that the visibility and/or viewability of the display device may be improved under the changing ambient or peripheral light conditions, e.g., solar light. The changed data may be obtained by increasing a saturation of the input image data.

Although the terms "first" and "second" etc. may be used herein to describe various elements, structures, components, regions, layers and/or sections, these elements, structures, components, regions, layers and/or sections should not be limited by these terms. These terms are only used to distinguish one element, structure, component, region, layer and/or section from another element, structure, component, region, layer and/or section. Thus, a first element, structure, component, region, layer or section discussed below could be termed a second element, structure, component, region, layer or section without departing from the teachings of exemplary embodiments.

The terminology used herein is for the purpose of describing particular embodiments only and is not intended to be limiting of exemplary embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which exemplary embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Exemplary embodiments have been disclosed herein, and although specific terms are employed, they are used and are to be interpreted in a generic and descriptive sense only and not for purpose of limitation. Accordingly, it will be understood by those skilled in the art that various changes in form and details may be made without departing from the scope of the present invention as set forth in the following claims.

## Claims

1. An organic light emitting diode (OLED) display, comprising:
a pixel unit (100) including a plurality of pixels (110) connected to scan lines (S₁, S₂, Sₙ) and data lines (D₁, D₂, Dₘ);
a scan driver (200) adapted to generate and supply scan signals to the scan lines (S₁, S₂, Sₙ);
a data driver (300) adapted to generate and supply data signals to the data lines (D₁, D₂, Dₘ);
an optical sensor (500) adapted to generate an optical sensing signal (Sₛₑₙₛ) according to an intensity of light of the environment; and
a data converter (400) adapted to store input image data (RGB Data) or changed input image data (R'G'B' Data) in accordance to the optical sensing signal (Sₛₑₙₛ), wherein changed input image data (R'G'B') is obtained by changing a luminance value and/or a saturation value of the input image data (RGB),
wherein the data driver (300) is adapted to generate the data signal corresponding to the input image data (RGB Data) or the changed input image data (R'G'B' Data),
the data converter (400) comprises:
a comparator (410) adapted to compare the optical sensing signal (Sₛₑₙₛ) with a predetermined reference value and to output a selection signal (Sₛₑₗ) not to change the input image data (RGB Data) when the optical sensing signal (Sₛₑₙₛ) is less than the predetermined reference value;
**characterized in that** the data converter (400) further comprises:
a controller (420) adapted to determine a changed or non-changed state of the input image data (RGB Data) corresponding to the selection signal (Sₛₑₗ);
a first calculator (430) adapted to calculate input data for each one of the subpixels (Rᵢₙ, Gᵢₙ, Bᵢₙ) from the input image data (RGB Data) received from the controller (420), to generate a saturation change matrix (435) for adjusting the saturation based on a previously selected saturation factor (k), to obtain destination saturation data for each one of the subpixels (Rₛ, Gₛ, Bₛ) by multiplying the input data for each subpixel (Rᵢₙ, Gᵢₙ, Bᵢₙ) and the saturation change matrix(435) and to generate pixel saturation data (Sₒᵤₜ) corresponding to the input image data (RGB Data) using the destination saturation data for each one of the subpixels (Rₛ, Gₛ, Bₛ);
a second calculator (440) adapted to extract changed data (R'G'B' Data) from a reference look-up table (445) corresponding to the pixel saturation data (Sₒᵤₜ) supplied from the first calculator (430), wherein the reference look-up table (445) includes saturation and luminance look-up tables; and
a memory (450) adapted to store the input image data (RGB Data) received from the controller (420) or the changed data (R'G'B' Data) supplied from the second calculator (440) and to supply the stored data to the data driver (300).

2. The OLED display as claimed in claim 1, wherein the controller (420) is adapted to store the input image data (RGB Data) in the memory (450) when a selection signal (Sₛₑₗ) not to change the input image data (RGB Data) is output.

3. The OLED display as claimed in claim 1, wherein the comparator (410) is adapted to output the selection signal (Sₛₑₗ) to change the input image data (RGB Data) when the optical sensing signal (Sₛₑₙₛ) is greater than the predetermined reference value.

4. The OLED display as claimed in claim 2, wherein the controller (420) is adapted to transmit the input image data (RGB Data) to the first calculator (430) when a selection signal (Sₛₑₗ) to change the input image data (RGB Data) is output.

5. The OLED display as claimed in one of claims 1 through 4, further comprising a saturation change matrix (435) to be calculated by the first calculator (430).

6. The OLED display as claimed in claim 5, wherein the pixel saturation data (Sₒᵤₜ) is set to a maximum value among the destination saturation data (Rₛ, Gₛ, Bₛ) for each one of the subpixels or to a predetermined value corresponding to a difference between a maximum value and a minimum value of the destination saturation data (Rₛ, Gₛ, Bₛ) for each one of the subpixels.

7. The OLED display as claimed in one of the preceding claims, wherein the second calculator (440) is adapted to linearly interpolate between two values adjacent to the pixel saturation data (Sₒᵤₜ) among values stored in the reference look-up table (445), so as to extract the changed data (R'G'B' Data) when the pixel saturation data input to the second calculator (440) are not stored in the reference look-up table (445).

8. A method for driving an organic light emitting diode (OLED) display, comprising:
supplying scan signals generated by a scan driver (200) to scan lines (S₁, S₂, Sₙ);
supplying data signals generated by a data driver (300) to data lines (D₁, D₂, Dₘ);
generating an optical sensing signal (Sₛₑₙₛ) according to an intensity of light of the environment sensed on an optical sensor (500);
a generating a selection signal (Sₛₑₗ) corresponding to the optical sensing signal (Sₛₑₙₛ), wherein the selection signal (Sₛₑₗ) is set to change the input image data (RGB Data) when the intensity of light of the environment is greater than a predetermined reference value;
determining a changed or non-changed state of the input image data (RGB Data) corresponding to the selection signal (Sₛₑₗ);
calculating the changed data (R'G'B' Data) by changing at least one of a saturation or a luminance of the input image data (RGB Data), when the selection signal (Sₛₑₗ) is set to change the input image data (RGB Data);
generating input data for each one of the subpixels (Rᵢₙ, Gᵢₙ, Bᵢₙ) from the input image data (RGB Data) received from the controller (420) and a saturation change matrix (435) for adjusting the saturation by using a previously selected saturation factor (k);
multiplying the input data for each one of the subpixels (Rᵢₙ, Gᵢₙ, Bᵢₙ) and the saturation change matrix (435) to obtain destination saturation data for each one of the subpixels (Rₛ, Gₛ, Bₛ);
generating pixel saturation data (Sₒᵤₜ) corresponding to the input image data (RGB Data) using the destination saturation data for each one of the subpixels (Rₛ, Gₛ, Bₛ);
extracting changed data (R'G'B' Data) from a reference look-up table (445) corresponding to the pixel saturation data (Sₒᵤₜ); and storing input image data (RGB Data) or changed input image data (R'G'B' Data) in accordance with the optical sensing signal (Sₛₑₙₛ) in a memory (450) and providing the stored data to the data driver (300).

9. The method as claimed in claim 8, further comprising:
performing a linear interpolation between two values adjacent to the pixel saturation data (Sₒᵤₜ) among the values stored in the reference look-up table (445) to extract the changed data (R'G'B' Data) when the pixel saturation data (Sₒᵤₜ) are not stored in the reference look-up table (445).

10. The method as claimed in claim 8, wherein the selection signal (Sₛₑₗ) is set not to change the input image data (RGB Data) when an intensity of light of the environment is less than a predetermined reference value.

11. The method as claimed in claim 10, further comprising storing the input image data (RGB Data) and generating a data signal corresponding to the stored input image data (RGB Data).

## Patentansprüche

1. Organische lichtemittierende Dioden (OLED)-Anzeige, aufweisend:
eine Pixeleinheit (100), die eine Vielzahl von Pixeln (110), die mit Ansteuerleitungen (S₁, S₂, Sₙ) und Datenleitungen (D₁, D₂, Dₘ) verbunden sind, aufweist,
einen Ansteuertreiber (200), der angepasst ist, um Ansteuersignale zu erzeugen und an die Ansteuerleitungen (S₁, S₂, Sₙ) anzulegen;
einen Datentreiber (300), der angepasst ist, um Datensignale zu erzeugen und an die Datenleitungen (D₁, D₂, Dₘ) anzulegen;
einen optischen Sensor (500), der angepasst ist, um ein optisches Abtastsignal (Sₛₑₙₛ) gemäß einer Intensität von Umgebungslicht zu erzeugen; und
einen Datenwandler (400), der angepasst ist, um Eingangsbilddaten (RGB-Daten) oder geänderte Eingangsbilddaten (R'G'B'-Daten) gemäß dem optischen Abtastsignal (Sₛₑₙₛ) zu speichern, wobei geänderte Eingangsbilddaten (R'G'B') durch Ändern eines Luminanzwerts und/oder eines Sättigungswerts der Eingangsbilddaten (RGB) erhalten werden,
wobei der Datentreiber (300) angepasst ist, um das Datensignal entsprechend den Eingangsbilddaten (RGB-Daten) oder den geänderten Eingangsbilddaten (R'G'B'-Daten) zu erzeugen,
wobei der Datenwandler (400) aufweist:
einen Komparator (410), der angepasst ist, um das optische Abtastsignal (Sₛₑₙₛ) mit einem vorbestimmten Referenzwert zu vergleichen und ein Selektierungssignal (Sₛₑₗ), um die Eingangsbilddaten (RGB-Daten) nicht zu ändern, wenn das optische Abtastsignal (Sₛₑₙₛ) kleiner als der vorbestimmte Referenzwert ist, auszugeben;
**dadurch gekennzeichnet, dass**
der Datenwandler (400) weiterhin aufweist:
eine Steuerung (420), die angepasst ist, um einen geänderten oder unveränderten Zustand der Eingangsbilddaten (RGB-Daten) entsprechend dem Selektierungssignal (Sₛₑₗ) zu bestimmen;
eine erste Rechenvorrichtung (430), die angepasst ist, um Eingangsdaten für jeden der Subpixel (Rᵢₙ, Gᵢₙ, Bᵢₙ) aus den von der Steuerung (420) erhaltenen Eingangsbilddaten (RGB-Daten) zu berechnen, um eine Sättigungsänderungsmatrix (435) zum Regulieren der Sättigung auf der Basis eines vorher ausgewählten Sättigungsfaktors (k) zu erzeugen, um Bestimmungssättigungsdaten für jeden der Subpixel (Rₛ, Gₛ, Bₛ) durch Multiplizieren der Eingangsdaten für jeden Subpixel (Rᵢₙ, Gᵢₙ, Bᵢₙ) und der Sättigungsänderungsmatrix (435) zu erhalten und um Pixelsättigungsdaten (Sₒᵤₜ) entsprechend den Eingangsbilddaten (RGB-Daten) mittels der Bestimmungssättigungsdaten für jeden der Subpixel (Rₛ, Gₛ, Bₛ) zu erzeugen;
eine zweite Rechenvorrichtung (440), die angepasst ist, um geänderte Daten (R'G'B'-Daten) von einer Referenz-Nachschlagetabelle (445) entsprechend den von der ersten Rechenvorrichtung (430) gelieferten Pixelsättigungsdaten (Sₒᵤₜ) zu extrahieren, wobei die Referenz-Nachschlagetabelle (445) eine Sättigungs- und eine Luminanz-Nachschlagetabelle aufweist; und
einen Speicher (450), der angepasst ist, um die von der Steuerung (420) erhaltenen Eingangsbilddaten (RGB-Daten) oder die von der zweiten Rechenvorrichtung (440) gelieferten geänderten Daten (R'G'B'-Daten) zu speichern und den Datentreiber (300) mit den gespeicherten Daten zu versorgen.

2. OLED-Anzeige nach Anspruch 1, wobei die Steuerung (420) angepasst ist, um die Eingangsbilddaten (RGB-Daten) im Speicher (450) zu speichern, wenn ein Selektierungssignal (Sₛₑₗ), um die Eingangsbilddaten (RGB-Daten) nicht zu ändern, ausgegeben wird.

3. OLED-Anzeige nach Anspruch 1, wobei der Komparator (410) angepasst ist, um das Selektierungssignal (Sₛₑₗ), um die Eingangsbilddaten (RGB-Daten) zu ändern, wenn das optische Abtastsignal (Sₛₑₙₛ) größer als der vorbestimmte Referenzwert ist, auszugeben.

4. OLED-Anzeige nach Anspruch 2, wobei die Steuerung (420) angepasst ist, um die Eingangsbilddaten (RGB-Daten) zur ersten Rechenvorrichtung (430) zu übertragen, wenn ein Selektierungssignal (Sₛₑₗ), um die Eingangsbilddaten (RGB-Daten) zu ändern, ausgegeben wird.

5. OLED-Anzeige nach einem der Ansprüche 1 bis 4, weiterhin aufweisend eine Sättigungsänderungsmatrix (435), die von der ersten Rechenvorrichtung (430) berechnet wird.

6. OLED-Anzeige nach Anspruch 5, wobei die Pixelsättigungsdaten (Sₒᵤₜ) auf einen höchsten Wert unter den Bestimmungssättigungsdaten (Rₛ, Gₛ, Bₛ) für jeden der Subpixel oder auf einen vorbestimmten Wert entsprechend einer Differenz zwischen einem höchsten Wert und einem kleinsten Wert der Bestimmungssättigungsdaten (Rₛ, Gₛ, Bₛ) für jeden der Subpixel eingestellt werden.

7. OLED-Anzeige nach einem der vorhergehenden Ansprüche, wobei die zweite Rechenvorrichtung (440) angepasst ist, um zwischen zwei Werten, die benachbart zu den Pixelsättigungsdaten (Sₒᵤₜ) unter in der Referenz-Nachschlagetabelle (445) gespeicherten Werten sind, linear zu interpolieren, um die geänderten Daten (R'G'B'-Daten) zu extrahieren, wenn die der zweiten Rechenvorrichtung (440) eingegebenen Pixelsättigungsdaten nicht in der Referenz-Nachschlagetabelle (445) gespeichert werden.

8. Verfahren zur Ansteuerung einer organischen lichtemittierenden Dioden (OLED)-Anzeige, aufweisend:
Anlegen von Ansteuersignalen, die von einem Ansteuertreiber (200) erzeugt werden, an Ansteuerleitungen (S₁, S₂, Sₙ);
Anlegen von Datensignalen, die von einem Datentreiber (300) erzeugt werden, an Datenleitungen (D₁, D₂, Dₘ);
Erzeugen eines optischen Abtastsignals (Sₛₑₙₛ) gemäß einer Intensität von Umgebungslicht, die von einem optischen Sensor (500) abgetastet wird;
Erzeugen eines Selektierungssignals (Sₛₑₗ) entsprechend dem optischen Abtastsignal (Sₛₑₙₛ), wobei das Selektierungssignal (Sₛₑₗ) eingestellt wird, um die Eingangsbilddaten (RGB-Daten) zu ändern, wenn die Intensität von Umgebungslicht größer als ein vorbestimmter Referenzwert ist;
Bestimmen eines geänderten oder unveränderten Zustands der Eingangsbilddaten (RGB-Daten) entsprechend dem Selektierungssignal (Sₛₑₗ);
Berechnen der geänderten Daten (R'G'B'-Daten) durch Ändern zumindest einer Sättigung oder einer Luminanz der Eingangsbilddaten (RGB-Daten), wenn das Selektierungssignal (Sₛₑₗ) eingestellt wird, um die Eingangsbilddaten (RGB-Daten) zu ändern;
Erzeugen von Eingangsdaten für jeden der Subpixel (Rᵢₙ, Gᵢₙ, Bᵢₙ) aus den von der Steuerung (420) erhaltenen Eingangsbilddaten (RGB-Daten) und einer Sättigungsänderungsmatrix (435) zum Regulieren der Sättigung mittels eines vorher ausgewählten Sättigungsfaktors (k);
Multiplizieren der Eingangsdaten für jeden der Subpixel (Rᵢₙ, Gᵢₙ, Bᵢₙ) und der Sättigungsänderungsmatrix (435), um Bestimmungssättigungsdaten für jeden der Subpixel (Rₛ, Gₛ, Bₛ) zu erhalten,
Erzeugen von Pixelsättigungsdaten (Sₒᵤₜ) entsprechend den Eingangsbilddaten (RGB-Daten) mittels der Bestimmungssättigungsdaten für jeden der Subpixel (Rₛ, Gₛ, Bₛ);
Extrahieren geänderter Daten (R'G'B-Daten) aus einer Referenz-Nachschlagetabelle (455) entsprechend der Pixelsättigungsdaten (Sₒᵤₜ); und
Speichern von Eingangsbilddaten (RGB-Daten) oder von geänderten Eingangsbilddaten (R'G'B'-Daten) gemäß dem optischen Sensorsignal (Sₛₑₙₛ) in einem Speicher (450) und Liefern der gespeicherten Daten zum Datentreiber (300).

9. Verfahren nach Anspruch 8, weiterhin aufweisend:
Durchführen einer linearen Interpolation zwischen zwei Werten, die benachbart zu den Pixelsättigungsdaten (Sₒᵤₜ) unter den in der Referenz-Nachschlagetabelle (445) gespeicherten Werten sind, um die geänderten Daten (R'G'B'-Daten) zu extrahieren, wenn die Pixelsättigungsdaten (Sₒᵤₜ) nicht in der Referenz-Nachschlagetabelle (445) gespeichert werden.

10. Verfahren nach Anspruch 8, wobei das Selektierungssignal (Sₛₑₗ) eingestellt wird, um die Eingangsbilddaten (RGB-Daten) nicht zu ändern, wenn eine Intensität von Umgebungslicht kleiner als ein vorbestimmter Referenzwert ist.

11. Verfahren nach Anspruch 10, weiterhin aufweisend Speichern der Eingangsbilddaten (RGB-Daten) und Erzeugen eines Datensignals entsprechend den gespeicherten Eingangsbilddaten (RGB-Daten).

## Revendications

1. Dispositif d'affichage à diodes électroluminescentes organiques (OLED), comprenant :
une unité à pixels (100) comportant une pluralité de pixels (110) connectés à des lignes de balayage (S₁, S₂, Sₙ) et à des lignes de données (D₁, D₂, Dₘ) ;
un circuit d'attaque de balayage (200) apte à générer et à délivrer des signaux de balayage aux lignes de balayage (S₁, S₂, Sₙ) ;
un circuit d'attaque de données (300) apte à générer et à délivrer des signaux de données aux lignes de balayage (D₁, D₂, Dₘ) ;
un capteur optique (500) apte à générer un signal de détection optique (Sₛₑₙₛ) en fonction d'une intensité lumineuse de l'environnement ; et
un convertisseur de données (400), apte à stocker des données d'image d'entrée (données RGB) ou des données d'image d'entrée modifiées (données R'G'B') en fonction du signal de détection optique (Sₛₑₙₛ), dans lequel des données d'image d'entrée modifiées (R'G'B') sont obtenues en modifiant une valeur de luminance et/ou une valeur de saturation des données d'image d'entrée (RGB),
dans lequel le circuit d'attaque de données (300) est apte à générer le signal de données correspondant aux données d'image d'entrée (données RGB) ou aux données d'image d'entrée modifiées (données R'G'B'),
le convertisseur de données (400) comprenant :
un comparateur (410) apte à comparer le signal de détection optique (Sₛₑₙₛ) à une valeur de référence prédéterminée et à fournir en sortie un signal de sélection (Sₛₑₗ) pour ne pas modifier les données d'image d'entrée (données RGB) lorsque le signal de détection optique (Sₛₑₙₛ) est inférieur à la valeur de référence prédéterminé ;
**caractérisé en ce que** le convertisseur de données (400) comprend en outre :
une unité de commande (420) apte à déterminer un état modifié ou non modifié des données d'image d'entrée (données RGB) correspondant au signal de sélection (Sₛₑₗ) ;
un premier calculateur (430) apte à calculer des données d'entrée pour chacun des sous-pixels (Rᵢₙ, Gᵢₙ, Bᵢₙ) à partir des données d'image d'entrée (données RGB) reçues de l'unité de commande (420), à générer une matrice de changement de saturation (435) pour ajuster la saturation sur la base d'un facteur de saturation précédemment sélectionné (k), pour obtenir des données de saturation de destination pour chacun des sous-pixels (Rₛ, Gₛ, Bₛ) en multipliant les données d'entrée pour chaque sous-pixels (Rᵢₙ, Gᵢₙ, Bᵢₙ) par la matrice de changement de saturation (435) et à générer des données de saturation de pixels (Sₒᵤₜ) correspondant aux données d'image d'entrée (données RGB) en utilisant les données de saturation de destination pour chacun des sous-pixels (Rₛ, Gₛ, Bₛ) ;
un second calculateur (440) apte à extraire des données modifiées (données R'G'B') d'une table de consultation de référence (445) correspondant aux données de saturation de pixels (Sₒᵤₜ) délivrées par le premier calculateur (430), la table de consultation de référence (445) comprenant des tables de consultation de saturation et de luminance ; et
une mémoire (450) apte à stocker les données d'image d'entrée (données RGB) reçues en provenance de l'unité de commande (420) ou les données modifiées (données R'G'B') délivrées par le second calculateur (440) et à délivrer les données stockées au circuit d'attaque de données (300).

2. Dispositif d'affichage OLED selon la revendication 1, dans lequel l'unité de commande (420) est apte à stocker des données d'image d'entrée (données RGB) dans la mémoire (450) lorsqu'un signal de sélection (Sₛₑₗ) ne modifiant pas les données d'image d'entrée (données RGB) est fourni en sortie.

3. Dispositif d'affichage OLED selon la revendication 1, dans lequel le comparateur (410) est apte à fournir le signal de sortie de sélection (Sₛₑₗ) pour modifier les données d'image d'entrée (données RGB) lorsque le signal de détection optique (Sₛₑₙₛ) est supérieur à la valeur de référence prédéterminée.

4. Dispositif d'affichage OLED selon la revendication 2, dans lequel l'unité de commande (420) est apte à transmettre les données d'image d'entrée (données RGB) au premier calculateur (430) lorsqu'un signal de sélection (Sₛₑₗ) destiné à modifier les données d'image d'entrée (données RGB) est fourni en sortie.

5. Dispositif d'affichage OLED selon l'une quelconque des revendications 1 à 4, comprenant en outre une matrice de changement de saturation (435) devant être calculée par le premier calculateur (430).

6. Dispositif d'affichage OLED selon la revendication 5, dans lequel les données de saturation de pixels (Sₒᵤₜ) sont réglées à une valeur maximale parmi les données de saturation de destination (Rₛ, Gₛ, Bₛ) pour chacun des sous-pixels ou à une valeur prédéterminée correspondant à une différence entre une valeur maximale et une valeur minimale des données de saturation de destination (Rₛ, Gₛ, Bₛ) pour chacun des sous-pixels.

7. Dispositif d'affichage OLED selon l'une des revendications précédentes, dans lequel le second calculateur (440) est apte à interpoler linéairement entre deux valeurs adjacentes à des données de saturation de pixels (Sₒᵤₜ) parmi des valeurs stockées dans la table de consultation de référence (445), de façon à extraire les données modifiées (données R'G'B') lorsque les données de saturation de pixels fournies en entrée au second calculateur (440) ne sont pas stockées dans la table de consultation de référence (445).

8. Procédé d'attaque d'un dispositif d'affichage à diodes électroluminescentes organiques (OLED), consistant à :
délivrer des signaux de balayage générés par un circuit d'attaque de balayage (200) à des lignes de balayage (S₁, S₂, Sₙ) ;
délivrer des signaux de données générés par un circuit d'attaque de données (300) à des lignes de données (D₁, D₂, Dₘ) ;
générer un signal de détection optique (Sₛₑₙₛ) en fonction d'une intensité de la lumière de l'environnement détectée sur un capteur optique (500) ;
générer un signal de sélection (Sₛₑₗ) correspondant au signal de détection optique (Sₛₑₙₛ), le signal de sélection (Sₛₑₗ) étant réglé pour modifier les données d'image d'entrée (données RGB) lorsque l'intensité lumineuse de l'environnement est supérieure à une valeur de référence déterminée ;
déterminer un état modifié ou non modifié des données d'image d'entrée (données RGB) correspondant au signal de sélection (Sₛₑₗ) ;
calculer les données modifiées (données R'G'B') en modifiant au moins l'une d'une saturation ou d'une luminance des données d'image d'entrée (données RGB) lorsque le signal de sélection (Sₛₑₗ) est réglé pour modifier les données d'image d'entrée (données RGB) ;
générer des données d'entrée pour chacun des sous-pixels (Rᵢₙ, Gᵢₙ, Bᵢₙ) à partir des données d'image d'entrée (données RGB) reçues de l'unité de commande (420) et d'une matrice de changement de saturation (435) destinée à ajuster la saturation en utilisant un facteur de saturation précédemment sélectionné (k) ;
multiplier les données d'entrée pour chacun des sous-pixels (Rᵢₙ, Gᵢₙ, Bᵢₙ) par la matrice de changement de saturation (435) afin d'obtenir des données de saturation pour chacun des sous-pixels (Rₛ, Gₛ, Bₛ) ;
générer des données de saturation de pixels (Sₒᵤₜ) correspondant aux données d'image d'entrée (données RGB) en utilisant les données de saturation de destination pour chacun des sous-pixels (Rₛ, Gₛ, Bₛ) ;
extraire des données modifiées (données R'G'B') d'une table de consultation de référence (445) correspondant aux données de saturation de pixels (Sₒᵤₜ) ; et
stocker des données d'image d'entrée (données RGB) ou des données d'image d'entrée modifiées (données R'G'B') en fonction du signal de détection optique (Sₛₑₙₛ) dans une mémoire (450) et fournir les données stockées au circuit d'attaque de données (300).

9. Procédé selon la revendication 8, consistant en outre à :
effectuer une interpolation linéaire entre deux valeurs adjacentes aux données de saturation de pixels (Sₒᵤₜ) parmi les valeurs stockées dans la table de consultation de référence (445) afin d'extraire des données modifiées (données R'G'B') lorsque les données de saturation de pixels (Sₒᵤₜ) ne sont pas stockées dans la table de consultation de référence (445).

10. Procédé selon la revendication 8, dans lequel le signal de sélection (Sₛₑₗ) est réglé pour ne pas modifier les données d'image d'entrée (données RGB) lorsqu'une intensité lumineuse de l'environnement est inférieure à une valeur de référence prédéterminée.

11. Procédé selon la revendication 10, consistant en outre à stocker les données d'image d'entrée (données RGB) et à générer un signal de données correspondant aux données d'image d'entrée stockées (données RGB).
